(19)

**Europäisches Patentamt**

**European Patent Office**

**Office européen des brevets**

(11) **EP 3 341 115 B1**

(12) **FASCICULE DE BREVET EUROPEEN**

(45) Date de publication et mention
de la délivrance du brevet:
**03.07.2019 Bulletin 2019/27**

(21) Numéro de dépôt: **16770042.6**

(22) Date de dépôt: **19.08.2016**

(51) Int Cl.:
***B01J 19/00*** *(2006.01)*    ***B01J 19/24*** *(2006.01)*

(86) Numéro de dépôt international:
**PCT/FR2016/052092**

(87) Numéro de publication internationale:
**WO 2017/032944 (02.03.2017 Gazette 2017/09)**

(54) **ECHANGEUR-RÉACTEUR INTÉGRANT LES RÉACTIONS DE VAPOREFORMAGE ET DE GAZ À L'EAU POUR LA PRODUCTION D'HYDROGÈNE**

TAUSCHERREAKTOR ZUR DURCHFÜHRUNG VON DAMPFREFORMIERUNG UND WASSERGASREAKTIONEN ZUR HERSTELLUNG VON WASSERSTOFF

EXCHANGER-REACTOR PERFORMING STEAM REFORMING AND WATER GAS REACTIONS FOR THE PRODUCTION OF HYDROGEN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.08.2015 FR 1557876**

(43) Date de publication de la demande:
**04.07.2018 Bulletin 2018/27**

(73) Titulaire: **L'Air Liquide Société Anonyme pour l'Etude et l'Exploitation des Procédés Georges Claude**
**75007 Paris (FR)**

(72) Inventeurs:
• **FLIN, Matthieu**
  **75018 Paris (FR)**
• **BASIN, Marie**
  **78000 Versailles (FR)**
• **DUBET, Olivier**
  **78530 Buc (FR)**
• **GARY, Daniel**
  **78180 Montigny le Bretonneux (FR)**
• **PROST, Laurent**
  **91190 Gif sur Yvette (FR)**
• **VALENTIN, Solène**
  **75007 Paris (FR)**
• **WAGNER, Marc**
  **94100 Saint Maur des Fosses (FR)**

(74) Mandataire: **Laigneau, Amandine**
**L'Air Liquide**
**Direction Propriété Intellectuelle**
**75, Quai d'Orsay**
**75321 Paris Cedex 07 (FR)**

(56) Documents cités:
**US-A1- 2005 138 864    US-A1- 2014 030 156**
**US-A1- 2014 140 896**

EP 3 341 115 B1

**Description**

La présente invention est relative à un échangeur-réacteur intégrant les réactions de vaporeformage et de gaz à l'eau pour la production d'hydrogène.

Actuellement le procédé le plus répandu de production d'hydrogène est le vaporeformage d'une charge hydrocarbonée. Cette réaction est catalytique et endothermique, la conversion du méthane est favorisée à haute température. La chaleur nécessaire à la réaction est obtenue par combustion dans un four radiatif. Le gaz de synthèse est donc obtenu à haute température (c'est-à-dire aux environs de 900°C). Dans le procédé actuel, le gaz de synthèse ainsi produit subit par la suite un refroidissement et plusieurs étapes de purification. Parmi ces étapes de purification, il y a la réaction du gaz à l'eau qui consiste à convertir le CO contenu dans le gaz de synthèse en sortie du reformeur en H2 et CO2 par réaction avec de la vapeur d'eau en présence d'un catalyseur par la réaction suivante :

$$CO + H_2O = H_2 + CO_2$$

Cette réaction est exothermique, la production d'hydrogène est donc thermodynamiquement favorisée à basse température. Cette réaction peut être mise en oeuvre à différentes températures suivant le type de catalyseur utilisé. Industriellement, on distingue quatre « types » de réaction du gaz à l'eau suivant la température de fonctionnement et le catalyseur utilisé.

On parle de réaction du gaz à l'eau à haute température (également appelée HT shift) pour des températures comprises entre 350°C et 450°C.

On parle de réaction du gaz à l'eau à moyenne température (également appelée MT shift) pour des températures comprises entre 200°C et 350°C.

On parle de réaction du gaz à l'eau à basse température (également appelée LT shift) pour des températures comprises entre 190°C et 235°C.

On peut parler également de réaction du gaz à l'eau à super haute température (également appelée S-HT shift) pour des températures comprises entre 500 et 650°C.

Les trois premiers « types » de réaction du gaz à l'eau sont aujourd'hui couramment rencontrés dans les unités industrielles et sont réalisés dans des réacteurs catalytiques adiabatiques en lit fixe.

Aujourd'hui, une optimisation déjà largement répandue propose la mise en oeuvre de la réaction de vaporeformage ou de gaz à l'eau dans un échangeur-réacteur et plus particulièrement dans des échangeurs-réacteurs à plaques. En revanche, il n'est pas proposé d'intégrer des réactions de vaporeformage et du gaz à l'eau au sein d'un même échangeur-réacteur à plaques, et à fortiori au sein d'un échangeur-réacteur monolithique c'est-à-dire ne présentant pas d'interface d'assemblages entre les étages.

Dans une solution selon le document US7250151, la chaleur nécessaire pour la réaction de vaporeformage du méthane est générée au sein même de l'échangeur-réacteur (une combustion catalytique est mise en oeuvre sur des plaques de combustion). Cependant cette solution est complexe car la combustion catalytique à l'intérieur des canaux est difficilement stable. De plus, cette solution n'intègre pas une zone où peut avoir lieu la réaction du gaz à l'eau. US2014/140896 décrit un réacteur en plaques ayant au moins trois étages.

De là, un problème qui se pose est de fournir un échangeur-réacteur amélioré permettant de réaliser au sein du même échangeur-réacteur les réactions de vaporeformage et du gaz à l'eau. Une solution de la présente invention est un échangeur-réacteur comprenant au moins trois étages avec au moins un étage comprenant à la fois selon la revendication 1 :

- des canaux millimétriques recouverts au moins partiellement d'un catalyseur apte à favoriser une réaction de vaporeformage, et
- des canaux millimétriques recouverts au moins partiellement d'un catalyseur apte à favoriser une réaction du gaz à l'eau.

Dans le cadre de la présente invention, on parlera d' « étages » pour tout type d'échangeur-réacteur c'est-à-dire pour les échangeurs-réacteurs présentant des plaques et des interfaces d'assemblage entre les plaques et pour les échangeurs-réacteurs qui sont des pièces monolithiques, c'est-à-dire des pièces ne présentant pas d'interfaces d'assemblages entre les étages. Une telle pièce monolithique peut-être obtenue par exemple par méthode additive.

On entend par canaux millimétiques de formes rectangulaire, cylindrique, semi-cylindrique ou tout autre dont le diamètre hydraulique est compris entre 0.1 mm et 5 mm. Le diamètre hydraulique (Dh) est défini comme le rapport:

$$Dh = \frac{4A}{P}$$

Où A est la section du canal et P le périmètre mouillé du canal.

Ledit échangeur-réacteur selon l'invention comprend une superposition des trois étages suivants :

- au moins un premier étage (1) comprenant une première zone (4) de canaux millimétriques permettant la circulation d'un fluide à une température supérieure à 700°C pour apporter une partie de la chaleur nécessaire à une réaction de vaporeformage et une deuxième zone (5) de canaux millimétriques permettant la circulation d'un fluide à une température inférieure à 650°C et préférentiellement inférieure à 500°C, pour récupérer la chaleur générée par une réaction de gaz à l'eau ;
- au moins un deuxième étage (2) comprenant une première zone (6) de canaux millimétriques recouverts au moins partiellement d'un catalyseur apte à favoriser une réaction de vaporeformage et une deuxième zone (7) de canaux millimétriques recouverts au moins partiellement d'au moins un catalyseur apte à favoriser une réaction du gaz à l'eau ; et
- au moins un troisième étage (3) comprenant une première zone (8) de canaux millimétriques permettant la circulation du gaz de synthèse obtenu par la réaction de vaporeformage pour récupérer une partie de la chaleur nécessaire à la réaction de vaporeformage et une deuxième zone (9) de canaux millimétrique permettant la circulation d'un fluide à une température inférieure à 650°C et préférentiellement inférieure à 500°C pour récupérer la chaleur générée par la réaction de gaz à l'eau.

Les fluides circulent de la manière suivante :

- Le fluide "chaud" avec une température d'entrée dans l'équipement supérieure à 700°C circule dans la première zone du premier étage dans le but d'apporter une partie de la chaleur nécessaire à la réaction de vaporeformage ;
- Le fluide "froid" avec une température inférieure à 650°C et préférentiellement à 500°C circule dans la seconde zone du premier étage et dans la seconde zone du troisième étage dans le but de récupérer la chaleur dégagée par la réaction de gaz à l'eau ;
- Le mélange réactionnel circule dans la première zone du deuxième étage où s'opère la réaction de vaporeformage. Le gaz de synthèse produit par la réaction de vaporeformage passe dans la première zone du troisième étage où il cède une partie de sa chaleur au mélange réactionnel puis il passe dans la deuxième zone du deuxième étage où a lieu la réaction de gaz à l'eau.

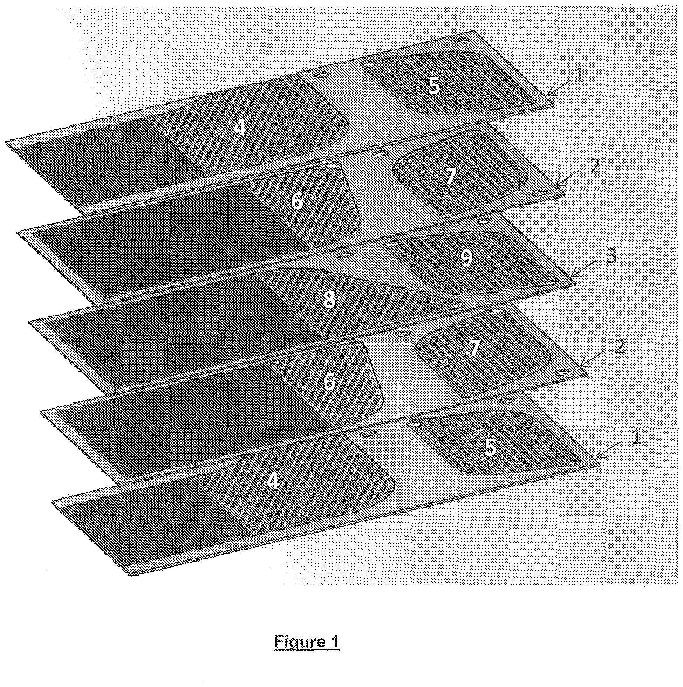

Le troisième étage 3 est encadré par deux deuxièmes étages 2 et l'ensemble ainsi formé par le troisième étage 3 et les deux deuxièmes étages est lui-même encadré par deux premiers étages 1 (figure 1).

L'étage 3 de «produits » est situé entre 2 étages 2 de réaction. Le mélange réactif qui circule dans les canaux de l'étage de réaction 2 est plus froid que le gaz de synthèse qui circule à contre courant dans les canaux de l'étage 3 de « produits ». De ce fait, il y a possibilité d'échanger de la chaleur du gaz de synthèse vers le mélange réactif et donc de récupérer de la chaleur. On peut donc préciser que ce sont les caractéristiques de l'étage qui permettent la récupération de chaleur et sa position dans l'empilement et la circulation à contre courant du gaz de synthèse plus chaud que le mélange. Le transfert se fait par convection entre le gaz de synthèse et les parois du canal dans lequel il circule, puis par conduction dans l'épaisseur des étages et enfin par convection entre les parois des canaux mélange réactif et le gaz à vaporeformer. Les tailles caractéristiques des canaux millimétriques et les faibles épaisseurs de parois entre les canaux situés entre 2 étages différents permettent de maximiser le transfert de chaleur. Pour un matériau donné les épaisseurs de parois entre les canaux d'un même étage ou entre les canaux de 2 étages successifs sont inférieures à 2mm. Les échangeurs-réacteurs sont fabriqués en matériaux de type base nickel (Inconel 601 - 625 - 617 - 690).

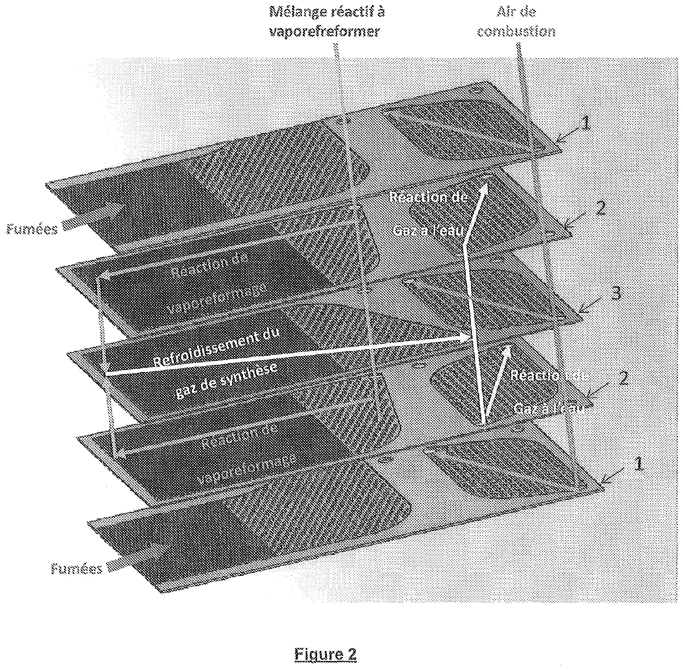

Pour une meilleure compréhension, la circulation des fluides au sein de l'échangeur-réacteur va être décrite à l'aide de la figure 2.

La charge à vaporeformer est amenée sur les étages 2 dans les zones 6 et circule à contre courant des fumées amenées dans la zone 4 des étages 1 qui permettent d'apporter une partie de la chaleur à la charge à vaporeformer. Une fois le vaporeformage effectué le gaz de synthèse passe dans la zone 8 de la plaque 3 par des ouvertures situées au bout des zones 6 des plaques (cas d'un empilement de plaques avec interfaces d'assemblage entre les plaques) ou par la connexion de 2 canaux des zones 6 des étages 2 qui se rejoignent à l'extrémité de la zone 8 des étages 3 (cas d'un échangeur-réacteur monolithique obtenu par exemple par méthode additive). Le gaz de synthèse sort ensuite de l'échangeur-réacteur au bout de la zone 8. Les fumées sortent au bout de la zone 4 sur le côté de l'échangeur-réacteur. Le gaz de synthèse subi ensuite une trempe à l'extérieur de l'échangeur-réacteur en passant notamment dans une chaudière. Le gaz de synthèse rentre de nouveau dans l'échangeur-réacteur à l'extrémité des sections 7 des étages 2 pour réaliser la réaction de shift. L'air de combustion circule à contre courant du gaz de synthèse en entrant par l'extrémité opposée des zones 5 des étages 1 et 2. La réaction de shift est donc refroidie par l'air de combusion et l'air est préchauffé. Cette récupération de chaleur shift/air n'existe pas habituellement et contribue à améliorer l'efficacité de l'ensemble du procédé par rapport aux procédés classiques. Si nécessaire on pourrait envisager une continuité de la circulation des fluides sur les étages en rajoutant une zone de vaporisation de l'eau face au gaz de synthèse.

La longueur de la délimitation entre la zone de vaporeformage et la zone de réaction du gaz à l'eau est à déterminer en fonction de l'étude des champs de contraintes de l'équipement et les contraintes maximales admissible par le matériau. En effet, il faudra adapter cette longueur en fonction du gradient de température le long de l'échangeur pour avoir des contraintes mécaniques admissibles.

On se propose donc ici d'intégrer dans un même échangeur-réacteur à plaques les réactions de vaporeformage et du gaz à l'eau. D'autre part, dans l'intégration proposée la réaction du gaz à l'eau est refroidie en continu par un fluide (par exemple de l'air ou de l'eau). Cela permet d'opérer le réacteur à une température globalement plus basse (c'est à dire entre 350 et 190°C, de préférence entre 250 et 190°C) que dans un réacteur conventionnel adiabatique, en évacuant par exemple les calories produites par la réaction exothermique de gaz à l'eau (fonctionnement isotherme) ou en refroidissant d'avantage (réacteur refroidi). L'objectif recherché par un fonctionnement à une température globalement plus basse dans le réacteur est de favoriser thermodynamiquement la conversion du monoxyde de carbone et la production d'hydrogène. D'autre part, la chaleur récupérée par le fluide qui sert à refroidir la réaction du gaz à l'eau peut être valorisée dans d'autres parties du procédé. Par exemple, si de l'air est utilisé comme réfrigérant, l'air ainsi préchauffé peut être utilisé directement comme air de combustion dans les brûleurs, étant préchauffé il est possible de réduire la quantité de combustible nécessaire pour le procédé. D'autre part, une partie de la chaleur nécessaire à la réaction de vaporeformage est fournie par le gaz de synthèse, ce qui permet d'améliorer l'efficacité globale du procédé de vaporeformage, en ayant la possibilité de diminuer la vapeur produite en excès par le procédé classique.

La solution proposée ici permet donc un haut niveau d'intégration thermique une fois implantée dans un procédé complet d'une unité de vaporeformage.

Avec la solution proposée ici, la chaleur nécessaire à la réaction de vaporeformage est apportée par convection par un fluide "chaud" qui circule sur certaines étages de l'échangeur réacteur et par convection par le gaz de synthèse chaud. La réaction de gaz à l'eau est quant à elle continuellement refroidie par une circulation d'un fluide "froid" qui circule sur certaines étages. L'échangeur-réacteur selon l'invention peut également présenter une ou plusieurs des caractéristiques suivantes :

- les premières zones représentent entre 50% et 95% de la surface de chaque étage et les secondes zones représentent entre 5% et 50% de la surface de chaque étage.
- le catalyseur favorisant la réaction de vaporeformage comprend des particules métalliques nanométriques à base de PD, Pt, Ir, Ni, ou Rh ou d'un mélange NiRh.
- les particules métalliques sont supportées par un oxyde inorganique.
- les catalyseurs favorisant la réaction du gaz à l'eau comprennent des particules métalliques nanométriques.
- les particules nanométriques sont dispersées sur des oxydes inorganiques.
- ledit échangeur-réacteur ne présente pas d'interfaces d'assemblages entre les différents étages.
- ledit échangeur-réacteur est fabriqué par méthode de fabrication additive.

L'invention propose une intégration innovante des réactions de vaporeformage et du gaz à l'eau au sein d'un même échangeur-réacteur et préférentiellement au sein d'un échangeur-réacteur à plaques / étages. Le premier avantage de cette solution provient donc du couplage des réactions de vaporeformage et du gaz à l'eau au sein d'un même échangeur-réacteur, ce qui permet un gain en compacité.

D'autre part, dans la solution proposée la réaction exothermique du gaz à l'eau est refroidie en continue par la circulation d'un fluide (par exemple de l'air ou de l'eau) qui s'effectue à contre-courant. Cela permet de travailler à une température globalement plus basse qu'un réacteur classique adiabatique et de préférence un fonctionnement isotherme du réacteur sera recherché afin d'augmenter la conversion du CO et la production d'hydrogène. Ainsi, pour une unité industrielle de production d'hydrogène donnée, il sera possible grâce à l'intégration proposée d'augmenter le rendement de l'unité et de diminuer ainsi la consommation en gaz de charge. Par ailleurs, l'utilisation d'échangeurs-réacteurs qui rassemblent à la fois les réactions de vaporeformage et du gaz à l'eau offre une plus grande flexibilité pour une unité industrielle car pour augmenter la capacité de production il suffira de multiplier le nombre d'échangeurs-réacteurs en parallèle.

Enfin, signalons que si ces réactions ont lieu en micro ou millicanaux, les transferts de matière et de chaleur pourront être améliorés par réduction des distances caractéristiques, ce qui se traduira soit par une augmentation de la production d'hydrogène pour une charge hydrocarbonée en entrée constante soit par une diminution de la consommation en charge hydrocarbonée pour une production d'hydrogène fixée. Par l'intensification des transferts de matière et de chaleur il est possible de travailler avec ce type d'équipement avec des temps de passage beaucoup plus faibles (typiquement 10 fois plus faibles) que dans les réacteurs conventionnels de vaporeformage et de gaz à l'eau. D'autre part, les quantités de catalyseurs engagés sont beaucoup moins importantes (typiquement 100 fois plus faibles) que pour les réacteurs conventionnels.

Le gaz de synthèse est produit dans un échangeur réacteur, assemblage d'étages constitués de canaux millimétriques et comportant deux zones distinctes à chaque étage. Une première zone est dédiée à la réaction endothermique de vaporeformage du méthane ; une seconde zone est dédiée à la réaction exothermique du gaz à l'eau.

Dans la première zone, ce réacteur comprend au moins un étage où un gaz chaud (ex. des fumées à une température comprise entre 700°C et 1100°C) circule afin d'apporter une partie de la chaleur nécessaire à la réaction, au moins un étage réactif qui est recouvert de catalyseur et où se déroule la réaction de vaporeformage (à des températures comprises entre 700°C et 1000°C) et au moins un étage, où le gaz de synthèse produit circule en apportant de la chaleur à la réaction. Le catalyseur de vaporeformage sera préférentiellement constitué de particules métalliques nanométriques à base de i) de Ni ii) de Rh, iii) d'un mélange NiRh. D'autres métaux peuvent également convenir comme Pd, Pt, Ir. Les métaux seront supportés sur un oxyde inorganique de type spinel (aluminate de Mg, aluminate de Ca...). Ces particules métalliques ultra divisées seront fortement dispersées pour conduire à un matériau très réactif. Le catalyseur pourra être déposé sur les plaques métalliques par n'importe quelle technique connue (washcoat...).

L'étage, où circule un gaz chaud, comprend une seconde zone où circule un réfrigérant (ex. de l'air froid), qui permet de refroidir la zone où se déroule la réaction du gaz à l'eau. L'étage réactif comprend dans la première zone un catalyseur pour le vaporeformage et la deuxième zone est recouverte entièrement ou en partie d'un catalyseur pour la réaction du gaz à l'eau. Il est également envisageable de déposer de manière contrôlée plusieurs catalyseurs de réaction du gaz à l'eau pour répondre au mieux à la gamme des températures opératoires pouvant être rencontrées le long d'un canal dédié à la réaction du gaz à l'eau. Les différentes sections de catalyseur de réaction du gaz à l'eau seront des catalyseurs constitués de particules métalliques nanométriques fortement dispersées sur des oxydes inorganiques jouant le rôle de supports ou d'agents bloquants. Ces catalyseurs pourront être :

- Section S-HTS : à base d'un mélange d'oxydes de CeZr ;
- Section HTS : à base de Fe dont la dispersion est assurée par la présence d'oxyde de Cr, ou à base de Zn dispersé sur de l'alumine. Ces 2 systèmes contiendront avantageusement des dopants tels que le Cu et/ou K ;
- Section MTS : à base de Cu dont la dispersion est assurée par la présence d'un binaire Zn+ Al. Généralement la teneur en Cu est de l'ordre de 20% ;
- Section LTS : à base de Cu dont la dispersion est assurée par la présence d'un binaire Zn+ Al. Généralement la teneur en Cu est de l'ordre de 40 à 50%. Ce système peut être avantageusement dopé par un alcalin, par exemple du Cs (minimisation des co-produits).

Le catalyseur pourra être déposé sur les plaques métalliques par n'importe quelle technique de dépôt connue (washcoat...).

Enfin, la plaque où circule dans la première zone le gaz de synthèse comporte une seconde zone où circule un réfrigérant. Après réaction du gaz à l'eau, le gaz sort du réacteur à des températures comprises entre 500°C et 180°C.

La pression de fonctionnement d'un tel système est comprise entre 1 atm et 60 atm, préférentiellement entre 20 et 30 atm.

Enfin, la présente invention a également pour objet un procédé de production d'hydrogène mettant en oeuvre un échangeur-réacteur selon l'invention.

**Revendications**

**1.** Echangeur-réacteur comprenant au moins trois étages avec au moins un étage comprenant à la fois :

- des canaux millimétriques recouverts au moins partiellement d'un catalyseur apte à favoriser une réaction de vaporeformage, et
- des canaux millimétriques recouverts au moins partiellement d'un catalyseur apte à favoriser une réaction du gaz à l'eau

, **caractérisé en ce que** ledit échangeur-réacteur comprend une superposition des trois étages suivants :

- au moins un premier étage (1) comprenant une première zone (4) de canaux millimétriques permettant la circulation d'un fluide à une température supérieure à 700°C pour apporter une partie de la chaleur nécessaire à une réaction de vaporeformage et une deuxième zone (5) de canaux millimétriques permettant la circulation d'un fluide à une température inférieure à 650°C et préférentiellement inférieure à 500°C, pour récupérer la chaleur générée par une réaction de gaz à l'eau ;
- au moins un deuxième étage (2) comprenant une première zone (6) de canaux millimétriques recouverts au moins partiellement d'un catalyseur apte à favoriser une réaction de vaporeformage et une deuxième zone (7) de canaux millimétriques recouverts au moins partiellement d'au moins un catalyseur apte à favoriser une réaction du gaz à l'eau ; et

- au moins un troisième étage (3) comprenant une première zone (8) de canaux millimétriques permettant la circulation du gaz de synthèse obtenu par la réaction de vaporeformage pour récupérer une partie de la chaleur nécessaire à la réaction de vaporeformage et une deuxième zone (9) de canaux millimétrique permettant la circulation d'un fluide à une température inférieure à 650°C et préférentiellement inférieure à 500°C pour récupérer la chaleur générée par la réaction de gaz à l'eau,

le troisième étage (3) étant encadré par deux deuxièmes étages (2) et l'ensemble ainsi formé par le troisième étage(3) et les deux deuxièmes étages est lui-même encadré par deux premiers étages (1).

2. Echangeur-réacteur selon la revendication 1, **caractérisé en ce que** les premières zones représentent entre 50% et 95% de la surface de chaque étage et les secondes zones représentent entre 5% et 50% de la surface de chaque étage.

3. Echangeur-réacteur selon l'une des revendications 1 ou 2, **caractérisé en ce que** le catalyseur favorisant la réaction de vaporeformage comprend des particules métalliques nanométriques à base de PD, Pt, Ir, Ni, ou Rh ou d'un mélange NiRh.

4. Echangeur-réacteur selon la revendication 3, **caractérisé en ce que** les particules métalliques sont supportées par un oxyde inorganique.

5. Echangeur-réacteur selon l'une des revendications 1 à 4, **caractérisé en ce que** les catalyseurs favorisant la réaction du gaz à l'eau comprennent des particules métalliques nanométriques.

6. Echangeur-réacteur selon la revendication 5, **caractérisé en ce que** les particules nanométriques sont dispersées sur des oxydes inorganiques.

7. Echangeur-réacteur selon l'une des revendications 1 à 6, **caractérisé en ce que** ledit échangeur-réacteur ne présente pas d'interfaces d'assemblages entre les différents étages.

8. Echangeur-réacteur selon la revendication 7, **caractérisé en ce que** ledit échangeur-réacteur est fabriqué par méthode de fabrication additive.

9. Procédé de production d'hydrogène mettant en oeuvre un échangeur-réacteur selon l'une des revendications 1 à 8.

**Patentansprüche**

1. Tauscherreaktor, umfassend mindestens drei Stufen mit mindestens einer Stufe, gleichzeitig Folgendes umfassend:

- Millimeter-Kanäle, die zumindest teilweise von einem Katalysator bedeckt sind, der in der Lage ist, eine Dampfreformierungsreaktion zu fördern, und
- Millimeter-Kanäle, die zumindest teilweise von einem Katalysator bedeckt sind, der in der Lage ist, eine Wassergasreaktion zu fördern,

**dadurch gekennzeichnet, dass** der Tauscherreaktor eine Überlagerung der folgenden drei Stufen umfasst:

- mindestens einer ersten Stufe (1), die eine erste Zone (4) von Millimeter-Kanälen, welche die Zirkulation eines Fluids bei einer Temperatur über 700 °C ermöglicht, um einen Teil der für eine Dampfreformierungsreaktion erforderlichen Wärme bereitzustellen, und eine zweite Zone (5) von Millimeter-Kanälen umfasst, welche die Zirkulation eines Fluids bei einer Temperatur unter 650 °C und vorzugsweise unter 500 °C ermöglicht, um die durch eine Wassergasreaktion erzeugte Wärme zu gewinnen;
- mindestens einer zweiten Stufe (2), die eine erste Zone (6) von Millimeter-Kanälen, die mindestens teilweise von einem Katalysator bedeckt sind, der in der Lage ist, eine Dampfreformierungsreaktion zu fördern, und eine zweite Zone (7) von Millimeter-Kanälen umfasst, die mindestens teilweise von mindestens einem Katalysator bedeckt sind, der in der Lage ist, eine Wassergasreaktion zu fördern; und
- mindestens einer dritten Stufe (3), die eine erste Zone (8) von Millimeter-Kanälen, welche die Zirkulation des durch die Dampfreformierungsreaktion erhaltenen Synthesegases ermöglicht, um einen Teil der für die Dampfreformierungsreaktion erforderlichen Wärme zu gewinnen, und eine zweite Zone (9) von Millimeter-Kanälen umfasst, welche die Zirkulation eines Fluids bei einer Temperatur unter 650 °C und vorzugsweise unter 500 °C ermöglicht, um die durch die Wassergasreaktion erzeugte Wärme zu gewinnen,

wobei die dritte Stufe (3) von zwei zweiten Stufen (2) umgeben ist und die Gesamtheit, die so durch die dritte Stufe (3) und die beiden zweiten Stufen gebildet wird, selbst von zwei ersten Stufen (1) umgeben ist.

2. Tauscherreaktor nach Anspruch 1, **dadurch gekennzeichnet, dass** die ersten Zonen zwischen 50 % und 95 % der Oberfläche jeder Stufe und die zweiten Zonen zwischen 5 % und 50 % der Oberfläche jeder Stufe ausmachen.

3. Tauscherreaktor nach einem der Ansprüche 1 oder 2, **dadurch gekennzeichnet, dass** der die Dampfreformierungsreaktion fördernde Katalysator nanometrische Metallpartikel auf Basis von Pd, Pt, Ir, Ni oder Rh oder einem NiRh-Gemisch umfasst.

4. Tauscherreaktor nach Anspruch 3, **dadurch gekennzeichnet, dass** die Metallpartikel durch ein anorganisches Oxid getragen werden.

5. Tauscherreaktor nach einem der Ansprüche 1 bis 4, **dadurch gekennzeichnet, dass** die Katalysatoren, welche die Wassergasreaktion fördern, nanometrische Metallpartikel umfassen.

6. Tauscherreaktor nach Anspruch 5, **dadurch gekennzeichnet, dass** die nanometrischen Partikel auf anorganischen Oxiden dispergiert sind.

7. Tauscherreaktor nach einem der Ansprüche 1 bis 6, **dadurch gekennzeichnet, dass** der Tauscherreaktor keine Zusammensetzungsschnittstellen zwischen den verschiedenen Stufen aufweist.

8. Tauscherreaktor nach Anspruch 7, **dadurch gekennzeichnet, dass** der Tauscherreaktor durch ein additives Herstellungsverfahren hergestellt wird.

9. Verfahren zur Herstellung von Wasserstoff unter Verwendung eines Tauscherreaktors nach einem der Ansprüche 1 bis 8.

**Claims**

1. Exchanger-reactor comprising at least three stages with at least one stage comprising both:

   - millimetric channels at least partially covered by a catalyst capable of promoting a steam-reforming reaction, and
   - millimetric channels at least partially covered with a catalyst capable of promoting a water-gas reaction,

   **characterised in that** said exchanger-reactor comprises the following three stages superimposed:

   - at least one first stage (1) comprising a first zone (4) of millimetric channels making it possible for the circulation of a fluid at a temperature greater than 700°C to provide part of the heat necessary for a steam-reforming reaction, and a second zone (5) of millimetric channels making it possible for the circulation of a fluid at a temperature less than 650°C and preferably less than 500°C to recover the heat generated by a water-gas reaction;
   - at least one second stage (2) comprising a first zone (6) of millimetric channels at least partially covered with a catalyst capable of promoting a steam-reforming reaction and a second zone (7) of millimetric channels at least partially covered with a least one catalyst capable of promoting a water-gas reaction; and
   - at least one third stage (3) comprising a first zone (8) of millimetric channels making it possible for the circulation of the synthesis gas obtained by the steam-reforming reaction to recover part of the heat necessary for the steam-reforming reaction, and a second zone (9) of millimetric channels making it possible for the circulation of a fluid at a temperature less than 650°C and preferentially less than 500°C to recover the heat generated by the water-gas reaction,

   the third stage (3) being framed by two second stages (2) and the assembly thus formed by the third stage (3) and the two second stages is itself framed by two first stages (1).

2. Exchanger-reactor according to claim 1, **characterised in that** the first zones represent between 50% and 95% of the surface area of each stage and the second zones represent between 5% and 50% of the surface area of each stage.

3. Exchanger-reactor according to one of claims 1 or 2, **characterised in that** the catalyst promoting the steam-reforming reaction comprises nanometric metal particles based on Pd, Pt, Ir, Ni or Rh or an NiRh mixture.

4. Exchanger-reactor according to claim 3, **characterised in that** the metal particles are supported by an inorganic oxide.

5. Exchanger-reactor according to one of claims 1 to 4, **characterised in that** the catalysts promoting the water-gas reaction comprise nanometric metal particles.

6. Exchanger-reactor according to claim 5, **characterised in that** the nanometric particles are dispersed on inorganic oxides.

7. Exchanger-reactor according to one of claims 1 to 6, **characterised in that** said exchanger-reactor does not have any assembly interfaces between the various stages.

8. Exchanger-reactor according to claim 7, **characterised in that** said exchanger-reactor is produced by the additive manufacturing method.

9. Hydrogen-production method implementing an exchanger-reactor according to one of claims 1 to 8.

Figure 1

Figure 2

## RÉFÉRENCES CITÉES DANS LA DESCRIPTION

**Documents brevets cités dans la description**

- US 7250151 B

- US 2014140896 A